**Europäisches Patentamt**

**European Patent Office**

**Office européen des brevets**

(11) Publication number: **0 115 372**
**B1**

(12) **EUROPEAN PATENT SPECIFICATION**

(45) Date of publication of patent specification: **25.11.87**

(21) Application number: **84200116.6**

(22) Date of filing: **30.01.84**

(51) Int. Cl.⁴: **A 01 B 13/02,** A 01 B 39/14

(54) Ridging apparatus.

(30) Priority: **31.01.83 NL 8300360**

(43) Date of publication of application:
**08.08.84 Bulletin 84/32**

(45) Publication of the grant of the patent:
**25.11.87 Bulletin 87/48**

(84) Designated Contracting States:
**BE DE FR GB NL**

(56) References cited:
**FR-A-2 381 457**
**GB-A- 674 769**
**NL-C- 168 683**

(73) Proprietor: **Groenewegen's**
**Landbouwwerktuigen B.V.**
**Koninginnelaan 6**
**NL-3181 GK Rozenburg (NL)**

(72) Inventor: **Westdijk, Jan**
**Koninginnelaan 8**
**NL-3181 GK Rozenburg (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

This invention relates to an earth ridging apparatus comprising a plurality of plough ridging elements in side-by-side arrangement in a line transverse to the direction in which the apparatus is advanced in operation and secured to a carrying beam or carrying frame, each of said ridging elements having a nose at its underside, which points in the direction of advance, the whole combination of ridging elements and carrying construction being securable to the rear end of a tractor or like vehicle.

A similar apparatus is disclosed in Netherlands patent application 6800460. As explained in that publication, ridging machines are much used for covering potatoes planted in rows with an earth ridge. Often, in combination with the ridging apparatus, a rotary cultivator is used for sufficiently loosening the earth to be moved by the ridging apparatus. In the prior apparatus, the ridging elements are spaced some distance apart, and these elements are fixedly connected to a carrying beam. Interposed between the ridging elements are adjustable scraper members for imparting a desired shape to the top of the ridge to be formed between adjacent ridging elements. Furthermore, in the prior apparatus, there are "wings" on each ridging element which are adjustable for the apparatus to be adapted to the spacing between the rows of seed potatoes to be covered. Thus by varying the position of the wings of the ridging elements, the shape and height of the earth ridges being formed are influenced to a certain extent.

It is noted that Netherlands patent 168,683 discloses a rotary cultivator with a ridging apparatus, in which the ridging elements are also combined to a continuous surface. That, however, concerns a ridging apparatus of quite a different type. In it, the ridging elements consist of flat surfaces arranged in V-shape, and disposed so that, in operation, they are dragged along the ground. In the specification, this is regarded as an advantage relative to a ridging apparatus operating by the plough principle, as does the apparatus according to the present invention. By virtue of its particular construction, the non-uniform shape of the earth ridges being formed, which is mentioned as a disadvantage of ridging apparatus operating by the plough principle, is not produced by the apparatus according to the present invention.

It is an objection of the present invention to improve the prior apparatus, and to provide a ridging apparatus by means of which fully identical earth ridges can be formed, and whose height and shape can be adjusted in a simple manner.

The purpose contemplated is achieved, according to the invention, with a ridging apparatus in which the ridging elements are interconnected to form one whole, each interconnection presenting a first concave continuous surface merging into said ridging elements, facing the direction of advance and forming a ridging edge with the edges of the surfaces between the noses of adjacent ridging elements extending gradually upwards from the plane in which said noses lie, so that, in operation, earth ridges of a shape dictated by said ridging edges are formed between the noses, the apparatus further comprising means for varying the position of said one whole to suit requirements to set the shape and height of the earth ridges being formed.

Accordingly, with the apparatus according to the invention, in operation, fully identical earth ridges are formed, as the shape is exclusively determined by the edge of the curved surface between two adjacent noses. The shape and height of the earth ridges being formed are varied in a very simple manner by varying the position of the continuous surface. This can be effected, as it were, with one movement of the hand. Compared with the prior apparatus, in which, to vary the shape of the earth ridges all the wings of the ridging elements have to be changed in position one by one, this is a considerable improvement. A continuously variable setting of the desired ridge shape is among the possibilities in the apparatus according to the invention.

In a preferred embodiment of the ridging apparatus according to the present invention, a cover plate element having a width virtually equal to the width of said one whole of said ridging elements is mounted for rotation about a horizontal shaft arranged along one side of said cover element to extend parallel to the carrying beam or carrying frame, said cover element being spaced some distance ahead of said carrying beam or carrying frame, the height of the cover element being such that, upon rotation of the cover element about said shaft the side of the cover element away from the shaft is in contact with the carrying beam or carrying frame.

In this preferred embodiment, when the apparatus is started the cover element is pressed into contact with the carrying beam or the carrying frame to form a closed space. As a consequence, the soil supplied, which is moved up and compacted by the ridging elements, cannot be forced backwards over the carrying beam or the carrying frame, so that, as contemplated, all soil is processed to form the earth ridges. When out of operation, however, the ridging system proper can be readily and easily inspected or cleaned, because the cover element then depends again in the vertical plane, so that the system is accessible from above.

In a further preferred embodiment of the apparatus according to the invention, said whole to which the ridging elements are interconnected is provided on opposite ends with a vertical sidewall, the plane of which extends virtually in the direction in which the apparatus is advanced when in operation.

The advantage of such a sidewall over and above the use of a complete ridging element on the outside is that when operating the apparatus immediately next to a series of earth ridges already formed the nearest earth ridge is not pushed aside.

In a further preferred embodiment of the apparatus according to the invention, said whole of said ridging elements is bounded at the top front side to a carrying beam provided with cross-beams or cross-bars directed forwardly from its opposite ends said cross-beams or cross-bars being at their forward ends secured for tilting movement to a suspension frame, said suspension frame comprising a locking mechanism for locking the whole of ridging surface, carrying beam and cross elements in a fixed position relative to the suspension frame, the arrangement being such that, after unlocking, the fixed position is changed, the whole is tilted about the point of attachment in the suspension frame, and hence the height of the edge of the curved surface relative to the earth surface and the position of the noses of the ridging elements are changed.

The suspension of the whole of integrated ridging elements, in this way, so that it is tiltable, but fixable, makes it possible to change the setting of the surface, and hence to vary the shape and height of the earth ridges being formed in a simple manner by means of one operation.

According to another preferred embodiment of the apparatus according to the invention, said suspension frame is itself suspended in a set of suspension arms which are securable to a tractor or like vehicle for tilting movement relative thereto, wherein the suspension frame with ridging elements is movable in a substantially vertical plane, said suspension frame including a draught control handle for setting a desired minimum height of the suspension plane relative to the earth surface on which the tractor or other vehicle finds itself.

With such a construction, if for any reason whatsoever, too much soil is present in front of the ridging elements, owing to the then resulting upward pressure of such soil, the ridging system proper is moved upwards until a condition of equilibrium is set, while nevertheless the shape and height of the earth ridges being formed is ensured.

The apparatus according to the invention is productive of highly uniform ridges. By virtue of this, the apparatus is very suitable for use in conjunction with methods of "pulling" crops by means of rubber rollers, which methods are much used at present.

The invention will now be elucidated with reference to the accompanying drawings, in which

Fig. 1 is an illustration of an essential part of one embodiment of the apparatus according to the invention;

Fig. 2 shows a front elevational view of the bottom part of a part of the system of ridging elements of the apparatus shown in Fig. 1;

Fig. 3 is a cross-sectional view from the top through a number of important parts of the apparatus shown in Fig. 1;

Figs. 4 and 5 illustrate the ridging system proper of the apparatus shown in Fig. 1 in different positions;

Figs. 6 and 7 are front elevational views, similar to the front elevational view of Fig. 2, but showing the positions shown in Figs. 4 and 5, respectively; and

Fig. 8 shows the apparatus of Fig. 1 with the suspension frame in a different position to prevent the danger of too much soil being supplied to, or thrown up by, the ridging elements.

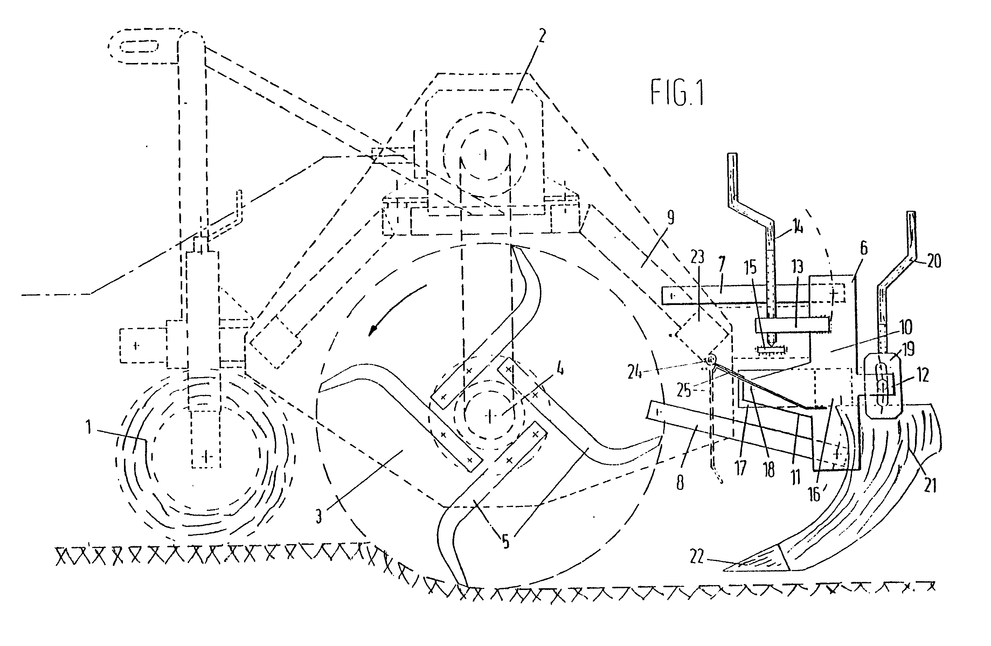

Fig. 1 shows, in side-elevational view, and partly in cross-section, the rear end of one embodiment of a tractor with an interrow rotary cultivator and ridging system according to the invention.

Secured behind a tractor or similar vehicle is an inter-row rotary cultivator, a draught setting wheel 1 of which is shown diagrammatically. This implement comprises a carrying structure 2, which is conventional for such purposes and will not be described in any detail, and to which the inter-row rotary cultivator 3 is secured. The cultivator 3 consists in essence of a plurality of tines 5, secured to, and around, a rotary shaft 4 to extend at an angle to each other. The construction of such an inter-row rotary cultivator is well-known, and will not be described in any detail herein. Secured to the carrying construction 2 behind the inter-row rotary cultivator 3 as viewed in the direction of advance of the tractor, is the ridging system which specifically forms part of the present invention.

The ridging system comprises a suspension frame 6 which by means of a set of suspension arms, of which arms 7 and 8 are shown, is secured to the carrying construction 2. The suspension arm 7 is secured for pivoting or tilting movement about the end away from the suspension frame 6 to a beam 9 of the carrying structure 2, which beam extends substantially rearwardly. At the other end, the arm 7 is secured for pivoting or tilting movement to the suspension frame 6. Similarly, the suspension arm 8 is secured for pivoting or tilting movement, at one end to carrying structure 2, and at the other end to the suspension frame 6. By virtue of this manner of suspension, the suspension frame 6 is capable of moving relatively to the carrying structure 2 in a substantially vertical plane.

The suspension frame 6 consists, for example, of a pair of side plates 10 interconnected by beams. Each plate 10 is provided with a forwardly directed projecting part 11 and a rearwardly directed projecting part 12. Furthermore, a horizontally disposed plate 13, provided with an aperture in the horizontal plane, is secured to one or both side plates 10. Mounted in the internally threaded aperture in plate 13 is a threaded depth-stop handle 14. By turning the handle 14, it extends more or less deeply through that aperture. The lower end of handle 14 is in contact with a stop plate 15 fixedly secured to the carrying structure 2. Accordingly, by operating the handle 14 the position of the suspension frame with the parts secured to it can be varied relative to the carrying structure 2 in a substantially vertical plane.

Suspended in the suspension frame 6 is the ridging system proper of the apparatus according to the invention. The ridging system proper consists of a carrying beam 16 arranged transversely to the direction of advance of the tractor. On opposite sides of the carrying beam 16, cross-beams or cross-arms 17 are secured to it. The combination of carrying beams 16 and cross-arms 17 is suspended in the suspension frame 6 for pivoting movement about the shaft 18. The other end of cross-arms 17 is secured by means of a continuously variable locking mechanism 19 to the projecting part 12 of the side plate 10 of the suspension frame 6. The setting of the ridging system proper relative to the suspension frame can be effected, for example, by means of an adjusting spindle 20, which operates similarly to the depth-stop handle 14.

Connected to the carrying beam 16 of the ridging system proper are the ridging elements, which are interconnected to one whole 21, each interconnection presenting a concave continuous surface merging into the ridging elements, so that the whole 21 can be described as a domed surface. Forwardly at the bottom of the whole 21 are the noses 22, which point in the direction of advance of the apparatus.

Suspended under a beam 23 of the carrying structure 2, which beams extends transversely to the plane of the page, is a plate 25 rotatable about a shaft 24. The plate 25, which extends along the beam 23, and similarly to that beam, substantially transversely to the direction of advance of the tractor, and has a width virtually equal to the width of the whole 21, has such a height that when plate 25 rotates about the shaft 24 the end away from the shaft is in contact with the carrying beam 16 of the ridging system proper. In the figure, the plate 25 is shown to be in contact with the carrier beam 16, while the plate 25 is shown in the freely depending state in ghost outline. In operation, the tines 5 loosen and throw up soil. Partly owing to this, the plate 25 is pushed up into contact with the carrying beam 16. As a result, a closed space is formed under the beam 23, the plate 25 and the carrying beam 16 and in front of the domed surface 21. The soil supplied will be advanced and compacted via the fan-shaped ridging elements with the noses 22, integrated to the surface 21, whereby the desired earth ridges are formed by the profile of the soil-guiding ridging elements between the noses 22.

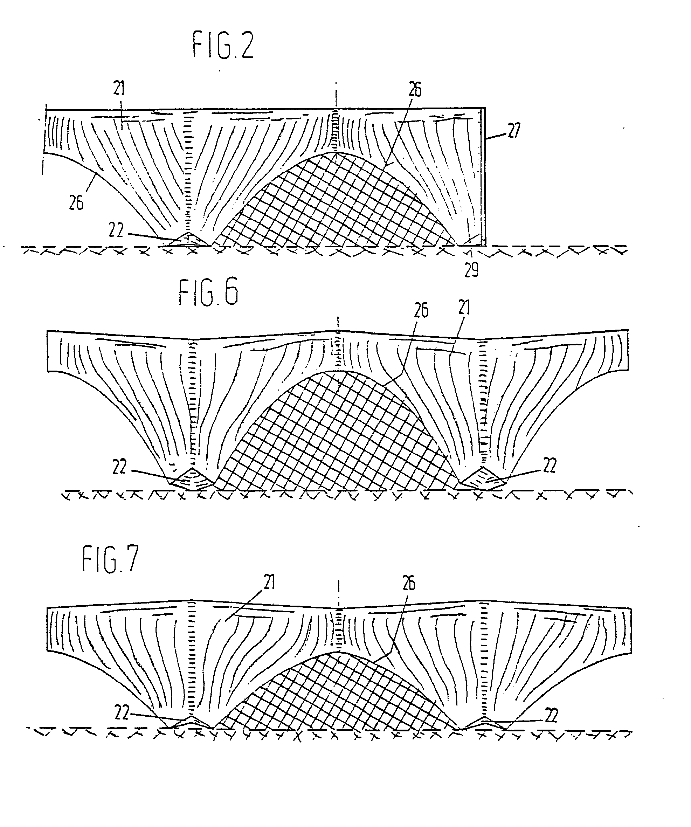

Fig. 2 shows a front elevational view of the lower part of a portion of the domed surface 21. Between the noses 22 of two adjacent ridging elements, integrated in the domed surface 21, the lower edge 26 of surface extends from the plane containing the noses 22 gradually upwards to a highest point located halfway between the noses 22. The edge 26 determines the shape of the earth ridge formed between the noses 22. In Fig. 2, a side face of the surface 21 is shown. Provided on that side face is a vertical sidewall 27, the plane of which is directed virtually in the direction in which the apparatus is advanced in operation, which sidewall adjoins a "half" ridging element 29. In operation, such a sidewall together with the adjoining "half" ridging element "draws" earth towards the ridge being formed between the "half" ridging element and the next ridging element. An advance relative to prior ridging apparatus without such a sidewall, but with a full-fledged ridging element on the outside is that there is no danger, as there is in the prior apparatus, that when the apparatus is moving along a series of earth ridges already formed, the closest earth ridge is "pushed over".

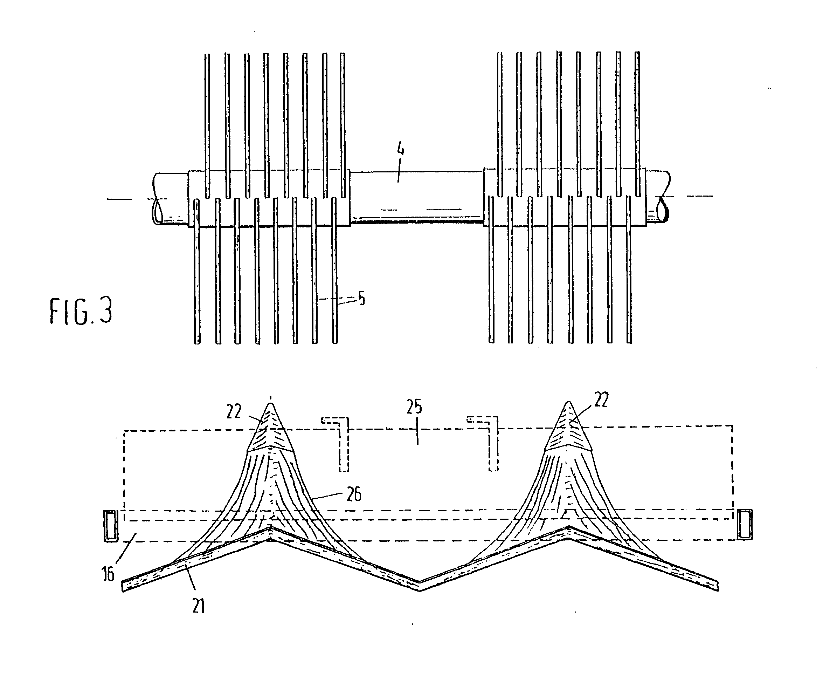

Fig. 3 shows a cross-section, viewed from above, through a number of important parts of a portion of the apparatus shown in Fig. 1. There are shown the shaft 4 of the inter-row rotary cultivator with the tines 5 attached thereto, and the lower parts with the noses 22 of two ridging elements integrated into the domed surface 21. Extending between the noses 22 is the lower edge 26 of the surface 21. Furthermore, the carrying beam 16 and the cover plate 25 are shown in ghost outline.

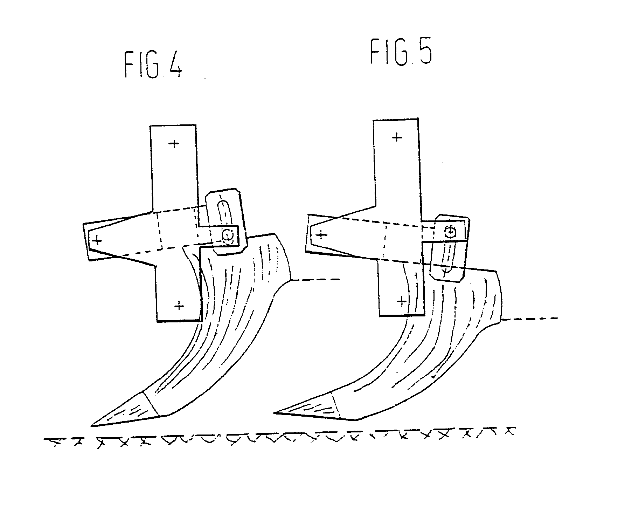

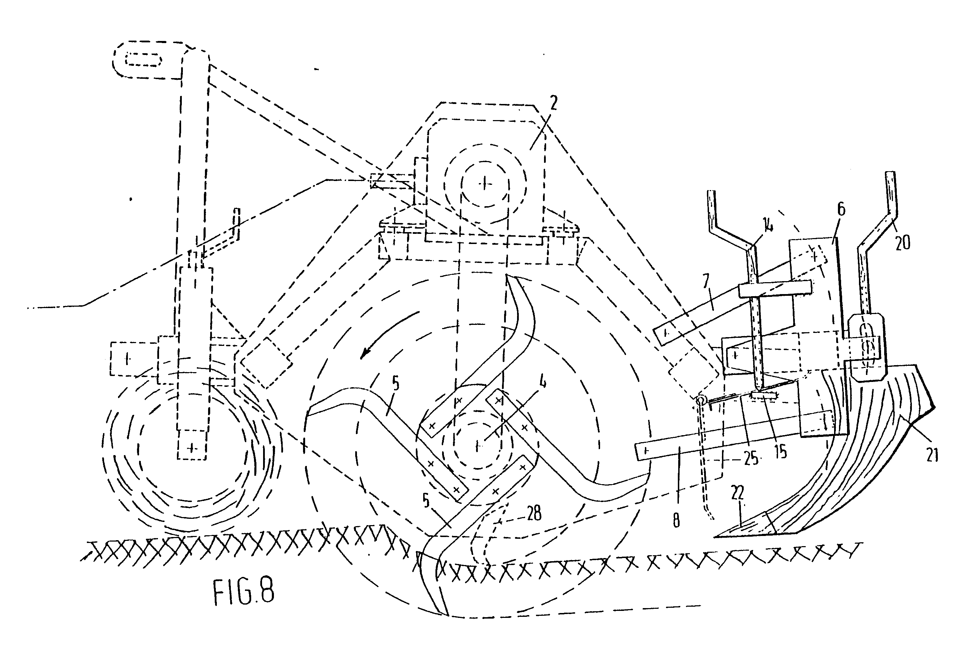

Fig. 4 shows the ridging system proper in a position tilted rather high about the shaft 18, and Fig. 5 shows the ridging system in a low position. A front-elevational view of a bottom part of the surface 21 pertaining to the position shown in Fig. 4 is depicted in Fig. 6, while Fig. 7 shows a similar front elevation pertaining to the position shown in Fig. 5. These figures clearly show that the earth ridges formed under the edge 26 of the surface 21 have a height and shape depending on the position of the ridging system relative to suspension frame 6.

Fig. 8 shows how the system operates if there is the danger that too much ground is thrown up by the ridging elements. Let it be supposed that the tines 5 have become worn in use. A worn tine is shown in broken lines. As, in the case of worn tines the entire carrying structure above the inter-row rotary cultivator comes to hang in a lower position relative to the ground, partially owing to the change in position of the depth setting wheel 1, the ridging system would also come to be in a lower position relative to the ground in the absence of suitable means. The noses 22 of the ridging elements forming part of the continuously domed surface 21 would thus penetrate to an undesirably deep level into the soil, which is not loosened by the rotary cultivator and accordingly in compact condition. This is prevented by raising the suspension frame 6 of the ridging system, by means of the depth-stop handle 14, to such an extent that the noses 22 are at the desired level closely spaced from the ground. During this operation the suspension arms 7 and 8 have been tilted upwards, and the whole suspension frame 6 has moved upwards in a virtually vertical plane.

If furthermore, for example, owing to the machine being tilted backwards in the case of irregularities in the field, more loose soil is formed by the tines of the rotary cultivator, and an excess of loose soil is formed in relation to the capacity of the continuously domed surface 21 to pass soil, the soil pressure will be increased, and push the ridging system upwards, via the pressure on the cover flap 25, until an equilibrium is set between the supply of soil and the soil passage capacity of the ridging system.

**Claims**

1. An earth ridging apparatus comprising a plurality of plough ridging elements in side-by-side arrangement in a line transverse to the direction in which the apparatus is advanced in operation and secured to a carrying beam or frame (16), each of said ridging elements having a nose (22) at its underside, which points in the direction of advance, the whole combination of ridging elements and carrying beam or frame (16) being securable to the rear end of a tractor or like vehicle, characterized in that the ridging elements are interconnected to form one whole (21), each interconnection presenting a concave continuous surface merging into said ridging elements, facing the direction of advance and forming a ridging edge (26) with the edges of the surfaces between the noses (22) of adjacent ridging elements extending gradually upwards from the plane in which said noses (22) lie, so that, in operation, earth ridges of a shape dictated by said ridging edges (26) are formed between the noses (22), the apparatus further comprising means (19, 20) for varying the position of said one whole (21) to suit requirements to set the shape and the height of the earth ridges being formed.

2. An earth ridging apparatus according to claim 1, characterized in that a cover plate element (25) having a width virtually equal to the width of said one whole (21) of said ridging elements is mounted for rotation about a horizontal shaft (24) arranged along one side of said cover element to extend parallel to the carrying beam or carrying frame (16), said cover element (25) being spaced some distance ahead of said carrying beam or carrying frame (16), the height of the cover element (25) being such that, upon rotation of the cover element (25) about said shaft (24) the side of the cover element (25) away from the shaft (24) is in contact with the carrying beam or carrying frame (16).

3. An earth ridging apparatus according to claim 2, characterized in that said whole (21) is provided on opposite ends with a vertical sidewall (27), the plane of which side wall (27) extends virtually in the direction in which the apparatus is advanced when in operation.

4. An earth ridging apparatus according to claims 1—3, characterized in that said whole (21) of said ridging elements is bounded at the top front side to a carrying beam (16) provided with cross-beams or cross-bars (17) directed forwardly from its opposite ends, said cross-beams or cross-bars (17) being at their forward ends secured for tilting movement to a suspension frame (6), said suspension frame (6) comprising a locking mechanism (19) for locking the whole or ridging surface (21), carrying beam (16), and cross-elements (17) in a fixed position relative to the suspension frame (6), the arrangement being such that, after unlocking, the fixed position is changed, the whole is tilted about the point of attachment (18) in the suspension frame (6), and hence the height of the edge (26) of the surface relative to the earth surface and the position of the noses (22) of the ridging elements are changed.

5. An earth ridging apparatus according to claims 1—4, characterized in that said suspension frame is itself suspended in a set of suspension arms (7, 8) which are securable to a tractor or like vehicle for tilting movement relative thereto, wherein the suspension frame (6) with ridging elements is movable in a substantially vertical plane, said suspension frame (6) including a draught control handle (14) for setting a desired minimum height of the suspension frame (6) relative to the earth surface on which the tractor or other vehicle find itself.

**Patentansprüche**

1. Vorrichtung zur Erzeugung von Erdbalken mit einer Vielzahl von Pflugelementen, die nebeneinander in einer Linie quer zur Vorlaufrichtung der sich bewegenden Vorrichtung angeordnet und an einem Halteträger oder Rahmen (16) befestigt sind, wobei jedes dieser Pflugelemente eine Schneidspitze (22) an seiner Unterseite aufweist, die in die Vorlaufrichtung weist, und wobei die gesamte Anordnung der Pflugelemente und des Halteträgers oder Rahmens (16) am hinteren Ende eines Traktors oder ähnlichen Fahrzeugs befestigbar ist, dadurch gekennzeichnet, daß die Pflugelemente unter Bildung einer Einheit (21) miteinander verbunden sind, wobei jede Verbindung eine konkave, kontinuierliche, mit den Pflugelementen verfließende Fläche bildet, die in die Vorlaufrichtung weist und zusammen mit den Kanten der Fläche zwischen den Schneidspitzen (22) nebeneinanderliegender Pflugelemente eine Pflugkante (26) bildet, die sich allmählich von der Ebene aus, in der die Schneidspitzen (22) angeordnet sind, nach oben erstreckt, so daß im Betrieb Erdbalken zwischen den Schneidspitzen (22) gebildet werden, deren Gestalt von den Schneidkanten (26) bestimmt wird, und daß die Vorrichtung weiterhin Mittel (19, 20) zur Veränderung der Position dieser einen Einheit (21) aufweist, die den Anforderungen zur Festlegung der Gestalt und der Höhe der gebildeten Erdbalken genügen.

2. Vorrichtung zur Erzeugung von Erdbalken nach Anspruch 1, dadurch gekennzeichnet, daß ein Abdeckplattenelement (25) mit einer der Breite der einen Einheit (21) von Pflugelementen entsprechenden virtuellen Breite um eine horizontale Achse (24) drehbar gelagert ist, die sich entlang einer Seite dieses Abdeckelements parallel zum Halteträger oder Halterahmen (16) erstreckt, daß dieses Abdeckelement (25) in einigem Abstand vor dem Halteträger oder Halterahmen (16) angeordnet ist und eine solche Höhe aufweist, daß die von der Achse (24) abgewandte Seite des Abdeckelements (25) bei einer Drehung des abdeckelements um diese Achse (24) in Berührung mit dem Halteträger oder Halterahmen (16) gelangt.

3. Vorrichtung zur Erzeugung von Erdbalken nach Anspruch 2, dadurch gekennzeichnet, daß diese Einheit (21) an gegenüberliegenden Enden mit einer vertikalen Seitenwand (27) versehen ist, deren Ebene sich virtuell in die Vorwärtsbewegungsrichtung der Vorrichtung im Betrieb erstreckt.

4. Vorrichtung zur Erzeugung von Erdbalken nach einem der Ansprüche 1 bis 3, dadurch gekennzeichnet, daß diese Einheit (21) von Pflugelementen im oberen Bereich der Vorderseite durch einen Halteträger (16) begrenzt ist, der mit von seinen gegenüberliegenden Enden aus nach vorne ausgerichteten Querträgern oder Querstangen (17) versehen ist, daß diese Querträger oder Querstangen (17) mit ihren vorderen Enden schwenkbar an einem Aufhängerahmen (6) befestigt sind, der einen Verriegelungsmechanismus (19) zur Verriegelung der aus Pflugfläche (21), Halteträger (16) und Querelementen (17) bestehenden Einheit in einer festen Position bezüglich des Aufhängerahmens (6) aufweist, wobei die Anordnung so ausgebildet ist, daß die feste Position nach einer Entriegelung verändert wird, die Einheit um den Befestigungspunkt (18) im Aufhängerahmen (6) geschwenkt wird und daher die Höhe der Kante (26) der Fläche relative zur Erdoberfläche und die Position der Schneidspitzen (22) der Pflugelemente verändert wird.

5. Vorrichtung zur Erzeugen von Erdbalken nach einem der Ansprüche 1 bis 4, dadurch gekennzeichnet, daß der Aufhängerahmen selbst in einer Gruppe von Aufhängearmen (7, 8) aufgehängt ist, die an einem Traktor oder einem ähnlichen Fahrzeug zur Erzielung einer Relativbewegung zu diesem befestigbar sind, wobei der mit den Pflugelementen versehene Aufhängerahmen (6) in einer im wesentlichen vertikalen Ebene bewegbar ist und einen Bedienungs-Ziehgriff (14) aufweist, um eine gewünschte Minimalhöhe des Aufhängerahmens (6) bezüglich der Erdoberfläche einzustellen, auf der sich der Traktor oder das andere Fahrzeug befindet.

**Revendications**

1. Un appareil pour butter la terre comprenant une pluralité d'éléments butteurs de charrue disposés côte-à-côte le long d'une ligne transversale à la direction suivant laquelle l'appareil est avancé en fonctionnement et fixés à une poutre ou châssis support (16), chacun desdits éléments butteurs ayant en partie inférieure un nez (22) qui pointe suivant la direction d'avance, la combinaison complète des éléments butteurs et de la poutre ou du châssis support (16) étant fixable à l'extrémité arrière d'un tracteur ou véhicule analogue, caractérisé en ce que les éléments butteurs sont interconnectées pour former un ensemble unitaire (21), chaque interconnexion présentant une surface continue concave fusionnée dans auxdits éléments butteurs, face à la direction d'avance et formant un bord de buttage (26) avec les bords des surfaces entre les nez (22) d'éléments butteurs adjacents s'étendant graduellement vers le haut à partir du plan contenant lesdits nez (22), afin que, en fonctionnement, des crêtes de terre de forme dépendant desdits bords de buttage (26) soient formées entre les nez (22), l'appareil comprenant en outre des moyens (19, 20) pour modifier la position dudit ensemble unitaire (21) de manière à s'adapter à des nécessités de réglage en forme et hauteur des crêtes de terre formées.

2. Un appareil pour butter la terre selon la revendication 1, caractérisé en ce qu'un élément de plaque de couverture (25) ayant une largeur sensiblement égale à la largeur dudit ensemble unitaire (21) desdits éléments butteurs est monté à rotation autour d'un arbre horizontal (24) disposé le long d'un côte dudit élément de couverture pour s'étendre parallèlement à la poutre ou au châssis support (16), ledit élément de couverture (25) étant éloigné d'une certaine distance de l'avant de ladite poutre support ou dudit châssis support (16), la hauteur de l'élément de couverture (25) étant telle que, lors de la rotation de l'élément de couverture (25) autour dudit arbre (24), le côté de l'élément de couverture (25) éloigné de l'arbre (24) est en contact avec la poutre support ou le châssis support (16).

3. Un appareil pour butter la terre selon la revendication 2, caractérisé en ce que ledit ensemble unitaire (21) est prévu, sur dés extrémités opposées, avec une paroi latérale verticale (27), le plan de laquelle paroi latérale (27) s'étend sensiblement dans la direction suivant laquelle l'appareil est avancé, en fonctionnement.

4. Un appareil pour butter la terre selon les revendications 1 à 3, caractérisé en ce que ledit ensemble unitaire (21) desdits éléments butteurs est relié au côté frontal supérieur d'une poutre support (16) munie de traverses ou barres transversales (17) dirigées vers l'avant à partir de ses extrémités opposées, lesdites traverses ou barres transversales (17) étant à leurs extrémités avant fixées à un châssis de suspension (6) pour s'incliner, ledit châssis de suspension (6) comprenant un mécanisme de verrouillage (19) pour verrouiller l'ensemble unitaire ou la surface de buttage (21), la poutre support (16), et les traverses (17) à une position fixée relativement au châssis de suspension (6), cet arrangement étant tel que, après déverrouillage, la position fixée soit changée, l'ensemble soit incliné autour du point de liaison (18) au châssis de suspension (6), et alors la hauter du bord (26) de la surface relativement à la surface de la terre et la position des nez (22) des éléments butteurs soient changées.

5. Un appareil pour butter la terre selon les revendications 1—4, caractérisé en ce que ledit châssis de suspension est lui-même suspendu par un jeu de bras de suspension (7, 8) qui sont fixables à un tracteur ou véhicule analogue pour s'incliner relativement à celui-ci, le châssis de suspension (6) avec les éléments butteurs étant déplaçable dans un plan sensiblement vertical, ledit châssis de suspension (6) incluant une manivelle de commande de pression (14) pour régler une hauteur minimale désirée du châssis de suspension (6) par rapport à la surface de la terre sur laquelle le tracteur ou autre véhicule se trouve lui-même.

FIG.1

0 115 372

FIG.2

FIG.6

FIG.7

FIG.3

4

5

22 22
25
26
16
21

FIG.4

FIG.5

FIG.8

0 115 372